# EUROPÄISCHE PATENTANMELDUNG

(11) **EP 0 593 055 A1**
(43) Veröffentlichungstag der Anmeldung: **20.04.1994**
(21) Anmeldenummer: 93116636.7
(22) Anmeldetag: 14.10.1993
(51) Int. Cl.: B60R 11/02, H04B 1/38, H04M 1/00

(54) **Freisprech-Adapter für Handtelefone**

(30) Priorität: 15.10.1992 DE 9213950 U
(71) Anmelder: MICROTEL S.n.c., I-24100 Bergamo (IT)
(72) Erfinder: Meiners, Franco, I-24129 Bergamo (IT)
(74) Vertreter: Gossel, Hans K., Dipl.-Ing.

(57) **Zusammenfassung**

Ein Freisprech-Adapter für Handtelefone, der ein freisprechendes Telefonieren an beliebigen Orten und insbesondere in Kraftfahrzeugen gestattet, besteht aus einem Gehäuse (1), das eine U-förmige Ausnehmung (2) mit einer Spanneinrichtung (20) zum Halten eines Handtelefons (66) in der Ausnehmung (2) besitzt. In dem Gehäuse (1) ist ein Lautsprecher angeordnet, der mit dem Lautsprecher der Hörmuschel des Handtelefons (66) gekoppelt ist. Das Gehäuse (1) besitzt eine Buchse zum Anschluß eines Freisprech-Mikrofons, das mit dem Mikrofon des Handtelefons (66) tonübertragend gekoppelt ist. Das Gehäuse (1) weist weiterhin eine Antenneneingangsbuchse auf, die mit der Antenne des Handtelefons (66) gekoppelt ist.

## Beschreibung

Die Erfindung betrifft einen Freisprech-Adapter für Handtelefone.

Unter Handtelefonen im Sinne der vorliegenden Erfindung sind handliche Funk-Telefone zu verstehen, die jeweils aus einem im wesentlichen rechteckigen Gehäuse mit einer ausziehbaren und einschiebbaren Antenne bestehen, das an seinem einen Ende mit einer Hörmuschel und seinem anderen Ende mit einem Mikrofon und in seinem mittleren Teil mit der Wähltastatur versehen ist, wobei zusätzlich noch Funktionstasten und eine LCD-Anzeige vorgesehen sein können. Derartige Handtelefone finden weltweit zunehmende Verbreitung, sind jedoch gegenwärtig in Deutschland noch nicht zugelassen.

Handtelefone der vorstehend beschriebenen Art können grundsätzlich auch in Kraftfahrzeugen aller Art und insbesondere Pkw benutzt werden, was jedoch einige Anpassungen erforderlich macht, da die Antenne des Handtelefons in dem von der Karosserie eingeschlossenen Raum nicht funktionsfähig ist. Ein weiteres Problem bei der Benutzung von Handtelefonen in Kraftfahrzeugen ergibt sich daraus, daß das Telefonieren mit einem in der Hand gehaltenen Telefon während des Fahrens wegen Beeinträchtigung des Fahrers gefährlich ist, so daß ein Verbot des Telefonierens mit Handtelefonen während des Fahrens zu erwarten ist.

Aufgabe der Erfindung ist es daher, einen raumsparenden und einfach aufgebauten Freisprechadapter für Handtelefone zu schaffen, der ein frei sprechendes Telefonieren an beliebigen Orten und insbesondere in Kraftfahrzeugen gestattet.

Erfindungsgemäß wird diese Aufgabe bei einem Freisprech-Adapter für Handtelefone durch ein Gehäuse gelöst, das mit einer U-förmigen Ausnehmung mit einer Spanneinrichtung zur Halterung eines Handtelefons in der Ausnehmung versehen ist, in dem ein Lautsprecher angeordnet ist, der mit dem Lautsprecher der Hörmuschel des Handtelefons gekoppelt ist, das eine Buchse zum Anschluß eines Freisprech-Mikrofons besitzt, das mit dem Mikrofon des Handtelefons tonübertragend gekoppelt ist, und das eine Antenneneingangsbuchse aufweist, die mit der Antenne des Handtelefons gekoppelt ist.

In die Ausnehmung des Gehäuses, das sich an beliebiger geeigneter Stelle des Innenraums eines Kraftfahrzeuges befestigen läßt, lassen sich einfach und schnell Funk-Handtelefone üblicher Bauart und üblichen Formats einlegen und durch die Spanneinrichtung fixieren. Die Einspannung erfolgt dabei in der Weise, daß die Hörmuschel und das Mikrofon des Handtelefons und die zwischen beiden liegende Tastatur nach außen weisen, so daß der Benutzer gewünschte Verbindungen in üblicher Weise durch Betätigung der Tastatur anwählen kann. Ist die Verbindung hergestellt, kann der Fahrer auch während des Fahrens freisprechend und freihörend Telefongespräche führen, da das Sprechen über das Freisprech-Mikrofon, das beispielsweise an die Sonnenblende angeklipst werden kann, und das Hören über den Lautsprecher des Gehäuses erfolgt, der mit einem entsprechenden Verstärker versehen ist.

Da nahezu geschlossene Innenräume von Fahrzeugkarosserien einen faradayschen Käfig bilden, ist das Funktelefon nur funktionsfähig, wenn die Fahrzeugantenne durch eine entsprechende Leitung mit dem Gehäuse des Freisprechadapters verbunden ist. Wird allerdings der Freisprechadapter außerhalb eines Kraftfahrzeugs, beispielsweise in einer Konferenz benutzt, kann auf eine Zusatzantenne verzichtet werden, da grundsätzlich die Antenne des Handtelefons für eine Übertragung des Gesprächs ausreichend sein wird.

In weiterer Ausgestaltung der Erfindung besteht die Spanneinrichtung aus einem auf einer Spannwelle befestigten Klemmhebel, wobei die Spannwelle durch eine Torsionsfeder unter Verspannung gehalten, in dem Gehäuse auf einer Seite der Ausnehmung drehbar gelagert ist und auf ihrem die Gehäuseoberseite überragenden Zapfen einen Betätigungshebel trägt. Der Klemmhebel kann das in die Aussparung eingelegte Handtelefon in einfacher Weise festspannen, wobei der Spannhebel auch größere, unterschiedliche Breiten der Ausnehmung und des Gehäuses des Handtelefons auszugleichen vermag. Durch Drehen der Spannwelle wird der Klemmnebel verschwenkt, wobei gleichzeitig die Torsionsfeder weiter gespannt wird, so daß der Klemmhebel das Handtelefon mit federndem Klemmdruck in der Aussparung festlegt.

Zweckmäßigerweise ist der Klemmhebel an seinem freien Ende gegabelt, und zwischen den Gabelschenkeln ist eine Spannrolle frei drehbar gelagert. Zum schonenden Angriff an dem Gehäuse des Handtelefons ist die Spannrolle zweckmäßigerweise mit einem Mantel aus elastomerem Material versehen. Auf der dem Klemmhebel gegenüberliegenden Seite der Aussparung können mindestens zwei Widerlager bildende und sich über die Höhe der Seite der Aussparung erstreckende wulstartige Streifen aus elastomerem Material angeordnet sein.

In weiterer Ausgestaltung der Erfindung ist zur einfachen Anpassung des Adapters an unterschiedliche Typen von Handtelefonen das Gehäuse mit einem schwenkbaren Bügel versehen, dessen eines Ende ein auf die Hörmuschel klappbares Mikrofon und dessen anderes Ende einen auf das Mikrofon klappbaren Lautsprecher trägt, die durch Leitungen mit einer Anschlußbuchse des Gehäuses verbunden sind. Durch das aufschwenkbare Mikrofon und den aufschwenkbaren Lautsprecher wird die tonübertragende Verbindung zwischen dem Handtelefon und dem Adapter-Gehäuse hergestellt. Das schwenkbare Mikrofon ist über einen zwischengeschalteten Verstärker mit dem in das Adapter-Gehäuse integrierten Lautsprecher verbunden. Weiterhin erfolgt eine Übertragung der frei gesprochenen Worte durch das Freisprech-Mikrofon und entsprechende Verstärkung auf den Lautsprecher, der unmittelbar die abgegebenen Töne in das Mikrofon des Handtelefons überträgt.

Zweckmäßigerweise besteht der Bügel aus einem etwa zur Mittelebene der Ausnehmung parallel verlaufenden Federstahlstreifen, der in seinem mittleren Bereich an einem Halteteil befestigt ist, wobei das Halteteil um eine zu der Mittelebene parallele Achse schwenkbar auf ein mit einem Seitenteil des Gehäuses verbindbares Befestigungsstück gelagert ist. Der Federstahlstreifen, der aus dem üblichen Material hergestellt sein kann, das für die Bügel von Kopfhörern verwendet wird, gestattet eine gute und elastisch nachgiebige Anpassung des klappbaren Mikrofons an den Lautsprecher der Hörmuschel und des klappbaren Lautsprechers an das Mikrofon des Handtelefons. Die Schwenkbarkeit des das Mikrofon und den Lautsprecher tragenden Bügels ist vorgesehen, um das Handtelefon behinderungsfrei in die Aussparung einsetzen und anschließend die tonübertragende Verbindung herstellen zu können.

Zweckmäßigerweise ist das Halteteil in einer Lage, in der das Mikrofon und der Lautsprecher auf die Hörmuschel und das Mikrofon des Handtelefons geschwenkt sind, an dem Befestigungsteil arretierbar.

Die Schenkel der Federstahlstreifen bestehen zweckmäßigerweise aus einander teilweise überlappenden, ausziehbaren und einschiebbaren Abschnitten, so daß eine einfache Anpassung an unterschiedliche Längen von Handtelefonen möglich ist.

Zusätzlich kann zweckmäßigerweise vorgesehen sein, zur Anpassung des Bügels an unterschiedliche Handtelefone das Befestigungsstück in unterschiedlichen Stellungen an dem Gehäuse zu arretieren. Das Befestigungsstück selbst kann gabelartige Schenkel aufweisen, die eine Seitenwandung des Gehäuses übergreifen und durch einen an einem Schenkel vorgesehenen Zapfen verrastend in eine Rastbohrung der Gehäusewand greifen.

Nach einer anderen Ausgestaltung der Erfindung kann auf die klappbaren, der Tonübertragung dienenden Mikrofone und Lautsprecher dadurch verzichtet werden, daß die Aussparung einendig durch eine mit Steckern versehene Wand geschlossen ist, die mit individuellen Buchsen des Handtelefons fluchten. Bei dieser Ausgestaltung ist das Handtelefon bereits von seiner Bauart her zur Halterung in einen Freisprech-Adapter ausgelegt, so daß die tonübertragenden Verbindungen elektrisch durch Herstellen der Steckverbindung mit Buchsen des Handtelefons bewirkt werden können. Dabei können zusätzliche Steckverbindungen vorgesehen sein, über die sich die Akkumulatoren des Handtelefons während der Halterung in dem Freisprech-Adapter aufladen lassen.

Das Adaptergehäuse ist mit Hohlräumen versehen, in denen Verstärker und die Anpassungselektronik untergebracht sind. Die Hohlräume können in einem verbreiterten Gehäuserand und in einem doppelten Boden des Gehäuses angeordnet sein.

Zweckmäßigerweise ist aus dem Gehäuse im Bereich der Antenne des Handtelefons eine Sendeantenne aussiehbar oder ausklappbar angeordnet, von der die von der Fahrzeugantenne empfangenen Signale auf die Handtelefon-Antenne nach entsprechender Verstärkung übertragen werden. Die Übertragung der Antennensignale ist dabei so günstig, daß das Handtelefon auch bei eingeschobener Antenne die Antennensignale empfängt.

Das Gehäuse kann mit einem mit der Kraftfahrzeugbatterie verbindbaren Versorgungskabel versehen sein. Das Gehäuse kann auch mit einer Kammer zur Aufnahme von Batterien oder Akkus zur Versorgung der in dem Gehäuse untergebrachten Elektronik versehen sein.

Das Gehäuse kann mit üblichen Schaltern versehen sein. Zweckmäßigerweise sind ein Schalter zur Aktivierung des Freisprech-Adapters und ein weiterer Schalter zur Stummschaltung vorgesehen. Dieser Stummchaltungs-(Muting)-Schalter kann derart geschaltet sein, daß er die Übertragung zu dem entfernten Fernsprechpartner unterbricht, andererseits aber die Verbindung von dem entfernten Fernsprechpartner aufrecht erhält. Wegen der Stummschaltungsintervalle kann dem entfernten Gesprächspartner eine eingespeicherte Musik zugespielt werden.

Ausführungsbeispiele der Erfindung werden nachstehend anhand der Zeichnungen näher beschrieben. In diesen zeigt:
- Fig. 1: eine Draufsicht auf das Adapter-Gehäuse,

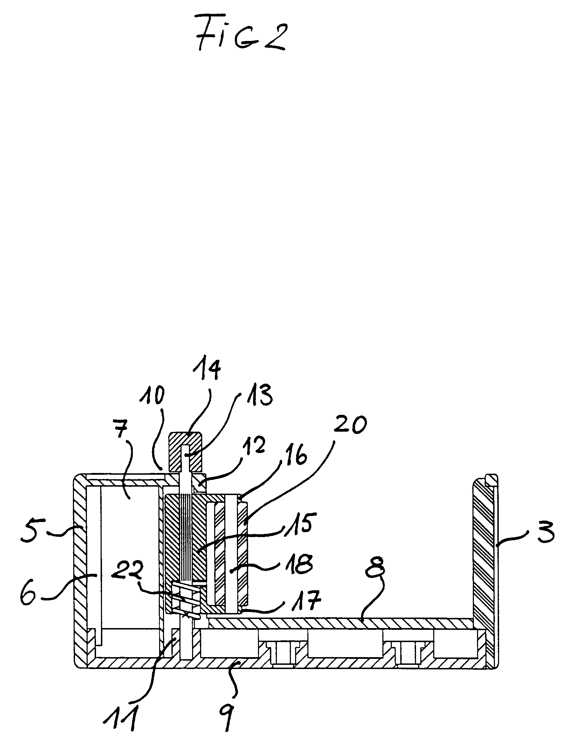

- Fig. 2: einen Schnitt durch das Adapter-Gehäuse längs der Linie A-B-C in Fig. 1,
- Fig. 3: einen Schnitt durch das Adapter-Gehäuse längs der Linie E-D in Fig. 1,
- Fig. 4: eine Ansicht des Adapter-Gehäuses in Richtung des Pfeils X in Fig. 1,
- Fig. 5: das Adapter-Gehäuse nach Fig. 1 mit einem in diesem gehalterten Hand- oder Mobiltelefon,
- Fig. 6: einen auf den rechten Gehäuserand des Adapter-Gehäuses gem. Fig. 1 aufsetzbaren, federnden Bügel mit Mikrofon und Lautsprecher,
- Fig. 7a bis 7d: Befestigungseinrichtungen zur Befestigung des Bügels nach Fig. 6 auf der rechten Gehäusewandung,
- Fig. 8: eine der Fig. 4 entsprechende Ansicht des Adapter-Gehäuses mit befestigtem Bügel zur Halterung des Mikrofons und des Lautsprechers,
- Fig. 9: eine Draufsicht auf das Adapter-Gehäuse mit in die Betriebsstellung geschwenktem Mikrofon und Lautsprecher,
- Fig. 10: eine der Fig. 5 entsprechende Ansicht mit auf die Hörmuschel und das Mikrofon des Mobiltelefons aufgeschwenktem Mikrofon und Lautsprecher,
- Fig. 11: eine Seitenansicht des Gehäuses gemäß Fig. 9 mit abgeklapptem Halterungsbügel,
- Fig. 12: eine Seitenansicht des Gehäuses gemäß Fig. 9,
- Fig. 13: das Gehäuse gem. Fig. 1 mit eingesetztem NOKIA-Adapter und in diesem gehaltertem NOKIA-Mobiltelefon sowie
- Fig. 14: eine Ansicht auf das Gehäuse gem. Fig. 13 mit entferntem Mobiltelefon in Richtung auf die durch den Adapter gebildete Rückwand.

Das Adapter-Gehäuse 1 besteht aus einem im wesentlichen rechteckigen Kasten mit einer U-förmigen, längs verlaufenden Aussparung 2, die auf der rechten Seite durch eine aufragende, schmale Gehäusewandung 3 und auf der linken Seite durch eine Gehäusewand 4 begrenzt ist, die einen zwischen der linken äußeren Gehäusewandung 5 sowie Deck- und Bodenwänden und Stirnwänden gebildeten Hohlraum 6 verschließt, in dem die Adapter-Elektronik 7 untergebracht ist. Der Boden der Aussparung 2 ist durch eine Bodenplatte 8 gebildet, die oberhalb des Gehäusebodens 9 auf Sockelleisten befestigt ist.

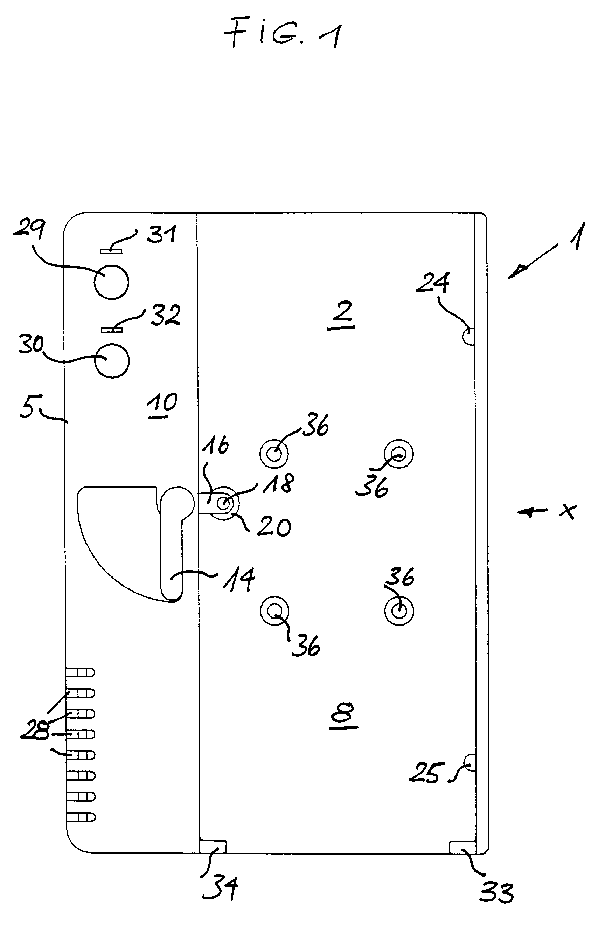

Zwischen der Deckwand 10 und einer angespritzten Buchse 11 des Bodens 9 ist eine Spannwelle 12 drehbar gelagert, auf deren die Deckwandung 10 überragenden Zapfen 13 ein Betätigungshebel 14 befestigt ist. Mit der Spannwelle 12 ist ein Klemmhebel 15 undrehbar verbunden, der ein gegabeltes, freies Ende aufweist. Zwischen den gegabelten Schenkeln 16, 17 ist in Lagerbohrungen die Achse 18 einer Klemmrolle frei drehbar gelagert, die mit einem Mantel 20 aus elastomerem Material versehen ist. Der Klemmhebel 15 ist durch eine gewendelte, vorgespannte Torsionsfeder in Richtung auf seine aus Fig. 1 ersichtliche ausgeschwenkte Stellung beaufschlagt. Die Schenkel der Torsionsfeder 22, die auf die Spannwelle 12 aufgeschoben ist, sind einmal mit dem Klemmhebel 15 und zum anderen mit dem Gehäuse fest verbunden.

Die rechte Gehäusewandung 3 ist mit über deren Höhe verlaufenden, wulstartigen Streifen 24, 25 aus elastomerem Kunststoff versehen, die Widerlager für das in der Aussparung gehalterte Mobiltelefon bilden.

Der langgestreckte Hohlraum 6 auf der linken Gehäuseseite ist in seinem unteren linken Bereich mit einer Reihe von Schlitzen 28 versehen, unter denen ein Lautsprecher angeordnet ist.

Auf der Deckwandung 10 des Hohlraums 6 ist ein Druckschalter 29 zum Aktivieren und Inaktivieren des Adapters und ein Druckschalter 30 zur Stummschaltung (Muting) vorgesehen. Der jeweilige Schaltzustand kann an den Dioden 31, 32 über den Schaltknöpfen abgelesen werden.

In seinem aus der Figur 1 ersichtlichen, unteren Bereich ist die Aussparung 2 mit seitlichen Stegen 33, 34 versehen, die Führungsstücke zum Aufschieben einer mit Steckern versehenen Wandung bilden, die auf entsprechende Buchsen eines Mobiltelefons abgestimmt sind. Die Stecker sind mit Kabeln versehen, die an ihren Enden ebenfalls einen Stecker tragen, der in eine entsprechende Adaptersteckdose des Gehäuses einsteckbar ist.

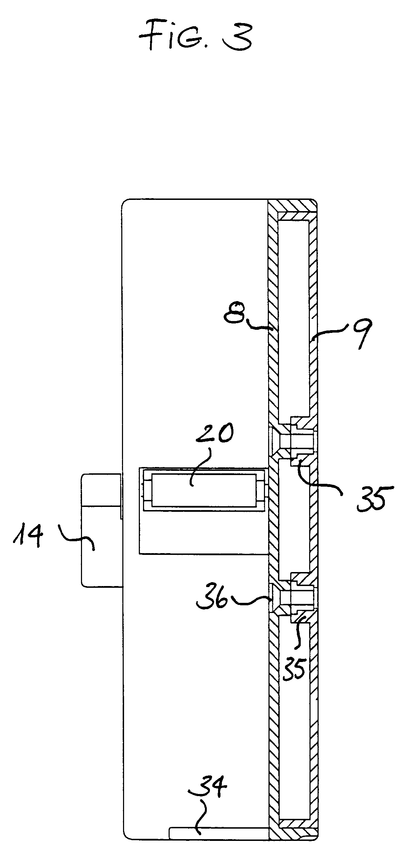

Aus Fig. 3 ist der Aufbau des Bodenbereichs des Gehäuses ersichtlich, wobei der Boden 8 mit abgewinkelten Randleisten versehen ist, die aufragende Randleisten der Bodenplatte 9 übergreifen, wobei die Bodenplatte 9 mit Sockeln 35 versehen ist, auf denen sich die Platte 8 mit angespritzten, ringförmigen Stützteilen abstützt. Im Bereich dieser Verbindungen ist der Boden mit Bohrungen 36 versehen, durch die Befestigungsschrauben zum Befestigen des Adapter-Gehäuses an einem Fahrzeug hindurchgeführt werden können.

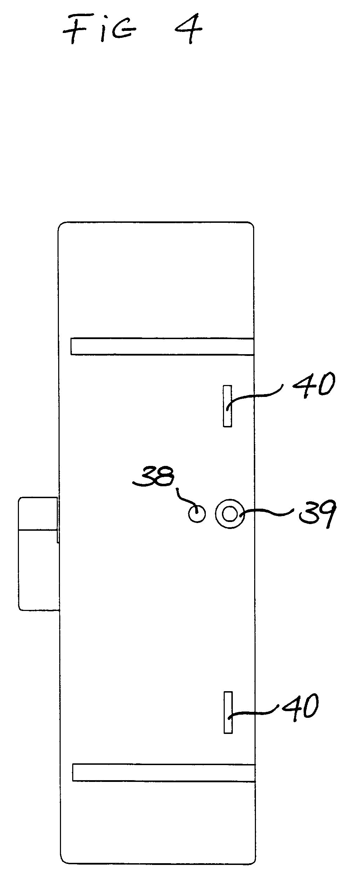

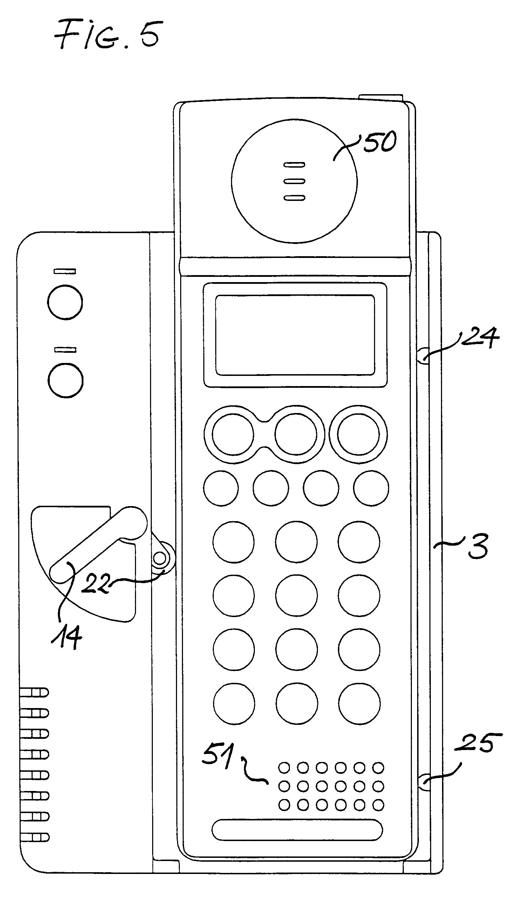

Die aus Fig. 4 ersichtliche äußere Seitenwand ist mit einer Bohrung 38 versehen, in die ein Zapfen des gegabelten Befestigungsteils für den das Adapter-Mikrofon und den Adapter-Lautsprecher tragenden Bügel eingreift. Zum Versetzen des Bügels in Längsrichtung des Gehäuses können mehrere Bohrungen 38 in einer Reihe angeordnet sein, um eine individuelle Anpassung zu ermöglichen. Im unteren Bereich der Seitenwand ist eine Buchse 39 vorgesehen, in die sich ein Stecker zur Verbindung des Adapter-Gehäuses mit dem Adapter-Mikrofon und dem Adapter-Lautsprecher einstöpseln läßt. Weiterhin weist die Seitenwand Aussparungen 40 auf, in die Zapfen der Bodenplatte 8 greifen.

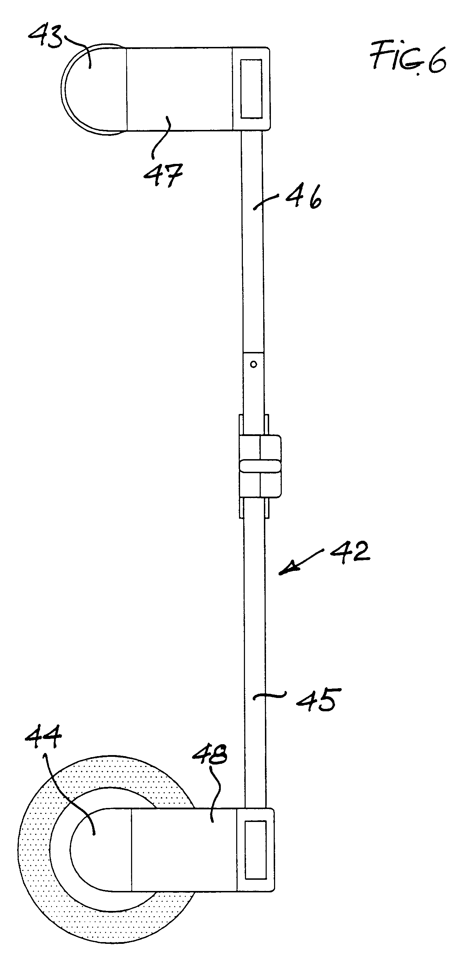

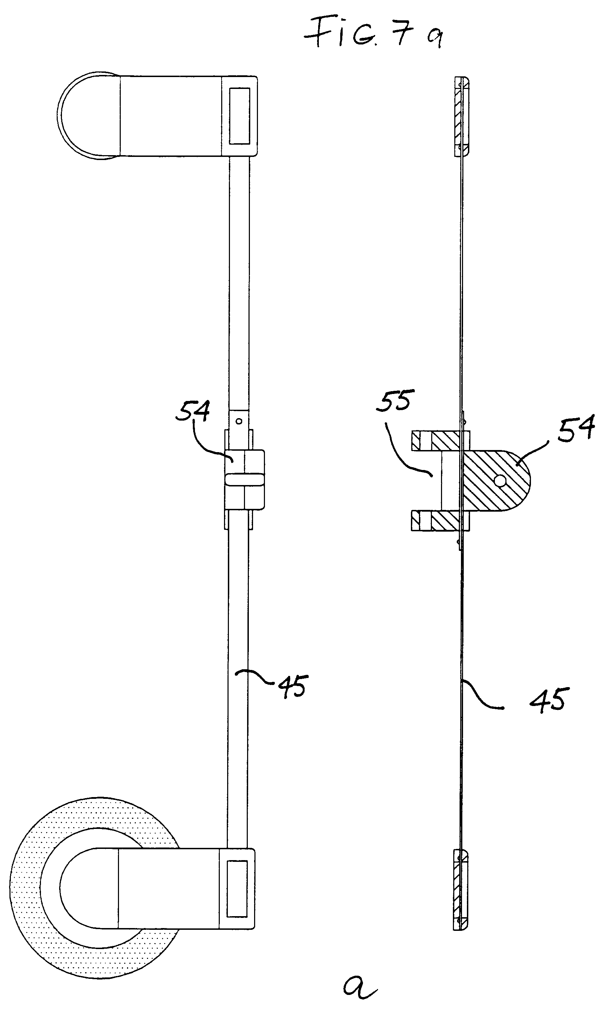

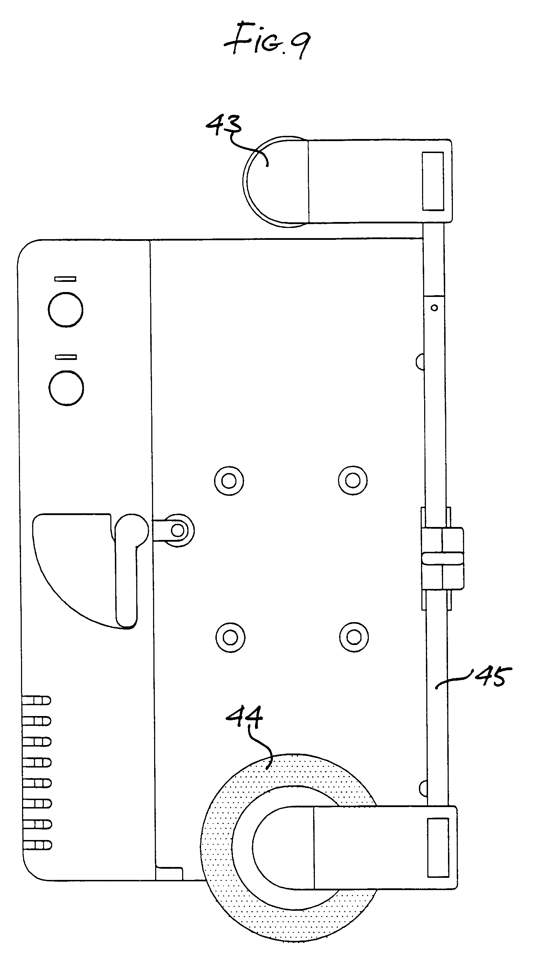

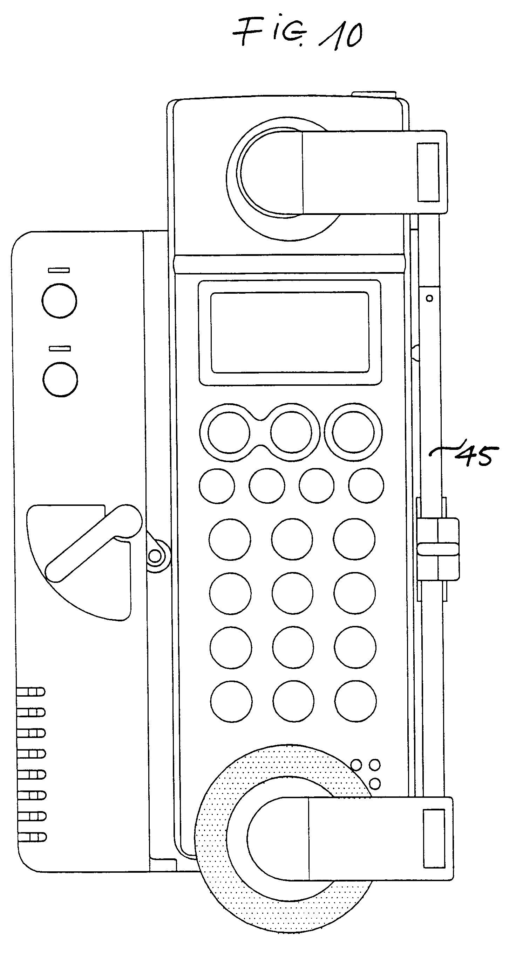

Aus Fig. 5 ist das Gehäuse nach Fig. 1 ersichtlich, in das ein Handtelefon üblicher Bauart eingespannt ist. Zum Einspannen des Handtelefons wird zunächst der Betätigungshebel 14 nach oben geschwenkt, so daß die Spannrolle 20 die Aussparung 2 freigibt. Anschließend wird das Mobiltelefon in die Aussparung 2 vollständig eingelegt und der Handhebel losgelassen, so daß die Spannrolle 20 in der dargestellten Weise spannend an der Seitenwand angreift und die gegenüberliegende Seitenwand des Mobiltelefons gegen die Widerlager-Streifen 24 und 25 drückt. Auf die rechte schmale Gehäusewand 3 wird dann in der aus den Figuren 9 und 10 ersichtlichen Weise der für sich allein in Fig. 6 dargestellte Bügel 42 aufgeklipst, der an seinem einen Ende ein Mikrofon 43 und an seinem anderen Ende einen Lautsprecher 44 trägt. Der Bügel 42 besteht aus einem Federstahlstreifen 45, wobei ein Schenkel des Bügels 42 von einem Federstahlstreifen-Abschnitt 46 überlappt ist, der in bekannter Weise zur Längenverstellung verschieblich geführt ist. An den Enden des Bügels sind rechtwinkelig Hebel 47, 48 angesetzt, die jeweils Haltestücke für das Mikrofon 43 und den Lautsprecher 44 bilden. Ist der Bügel 42 in der aus Fig. 9 ersichtlichen Weise auf die Seitenwand 3 aufgeklipst, lassen sich das Mikrofon 43 und der Lautsprecher 44 in der aus Fig. 10 ersichtlichen Weise mit federndem Andruck auf die Hörmuschel 50 und das Mikrofon 51 des Handtelefons klappen.

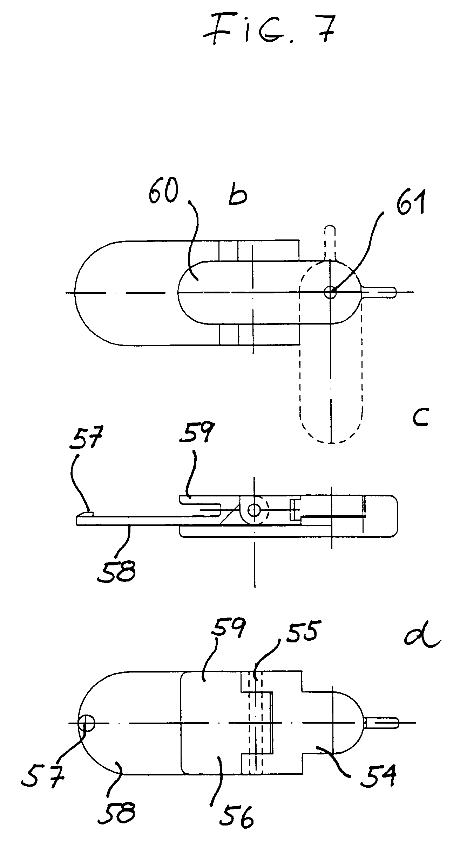

Der Bügel 45 ist in der aus Fig. 7 ersichtlichen Weise an einem Tragstück 54 befestigt, das gelenkig durch eine Gelenkachse 55 mit einem gegabelten Klemmstück 56 verbunden ist. Das gegabelte Klemmstück 56 weist einen mit einem Rastzapfen 57 versehenen längeren Schenkel 58 und einen die Innenseite der Wandung 3 übergreifenden kürzeren Schenkel 59 auf. Zur Arretierung in der Betriebsstellung ist an dem Tragstück 54 ein Hebel 60 um eine Achse 61 schwenkbar gelagert, der sich in Fig. b in voll ausgezogenen Linien in seiner arretierenden Stellung und in gestrichelten Linien in einer Stellung befindet, in der der Bügel 45 um die Schwenkachse 55 schwenkbar ist.

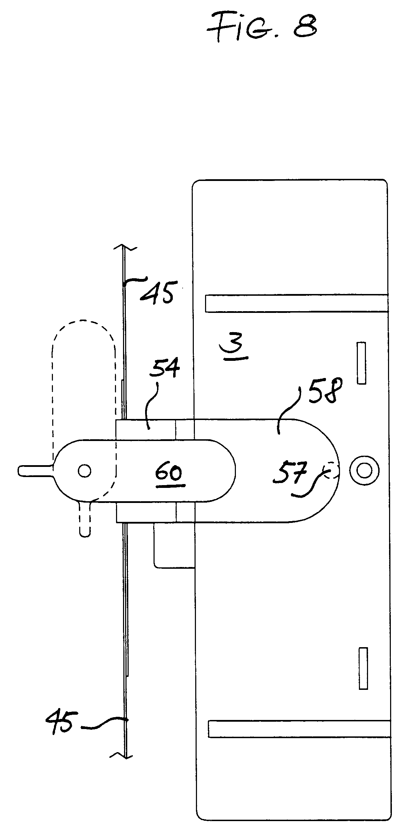

Die Art der Befestigung des gegabelten Klemmstücks auf der Seitenwand 3 ist besonders gut aus Fig. 8 ersichtlich. Bei der aus Fig. 8 ersichtlichen Ausführungsform besteht der Bügel jeweils aus zwei Schenkeln, die in einem Schlitz des Haltestücks 54 gehaltert und durch Ein- und Ausschieben auf ihre gewünschte Länge einstellbar sind. Der längere Schenkel 58 ist über seinen Zapfen 57 in der Bohrung 38 der Wandung 3 verrastet.

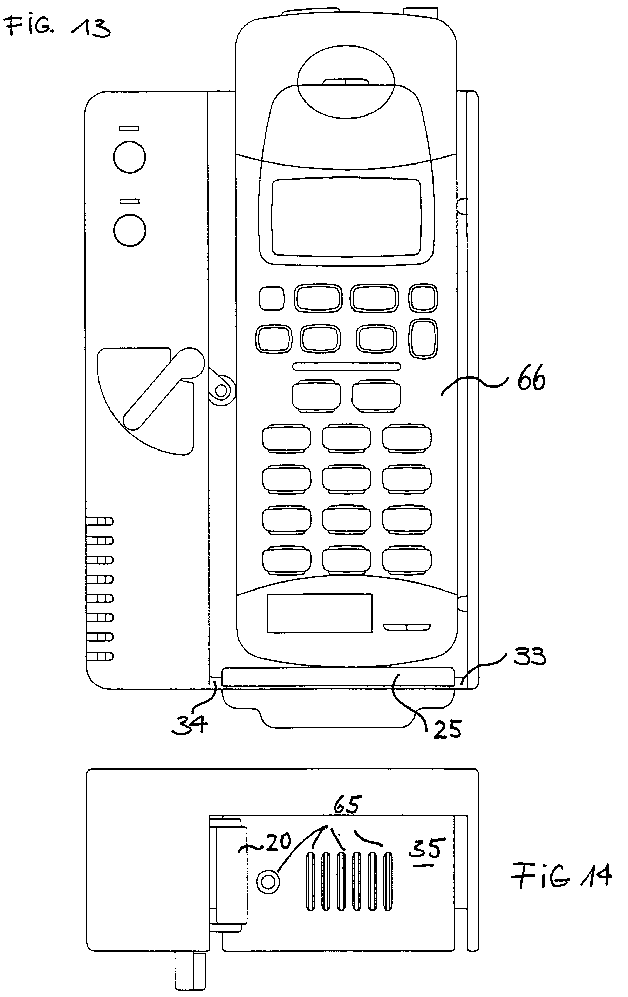

Der in vollen Linien dargestellte Arretierungshebel 60 befindet sich in seiner aus Fig. 12 ersichtlichen arretierenden Stellung, in der das Adapter-Mikrofon und der Adapter-Lautsprecher auf die Hörmuschel und das Mikrofon des Handtelefons geklappt sind.

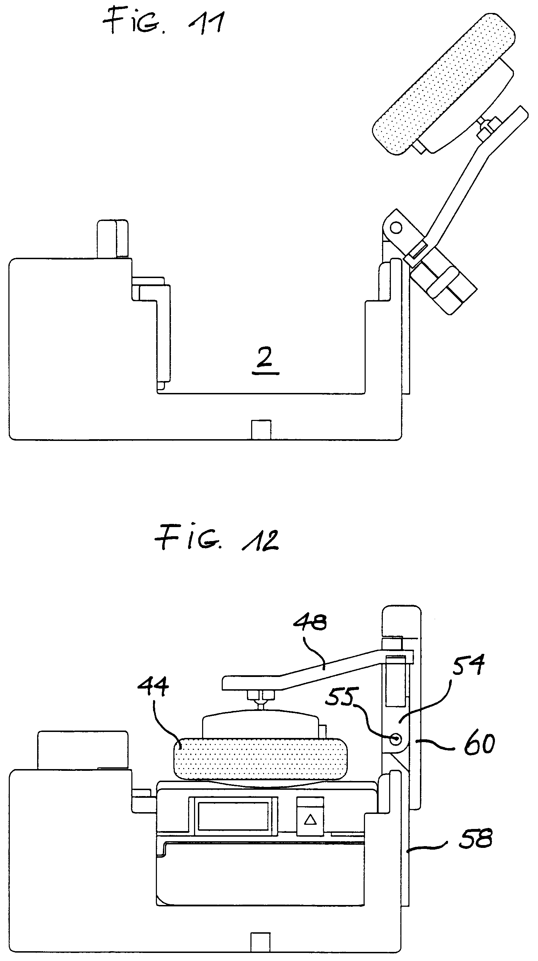

Aus Fig. 11 ist der das Adapter-Mikrofon und den Adapter-Lautsprecher tragende Bügel in seiner hochgeklappten Stellung ersichtlich, in der der Arretierungshebel 60 in die aus Fig. 8 ersichtliche gestrichelte Stellung geschwenkt ist, so daß die Aussparung 2 zum Einlegen eines Mobiltelefons frei zugänglich ist.

Bei der aus Fig. 13 ersichtlichen Variante ist auf die seitlichen Führungsleisten 33, 34 eine Adapterplatte 35 aufgeschoben, die mit Steckern 65 versehen ist, die mit entsprechenden Buchsen des Mobiltelefons 66 fluchten. Die austauschbare Adapterplatte 35 läßt sich je nach Art des verwendeten Handtelefons austauschen.

## Patentansprüche

1. Freisprech-Adapter für Handtelefone, **gekennzeichnet durch** ein Gehäuse,
das mit einer U-förmigen Ausnehmung mit einer Spanneinrichtung zur Halterung eines Handtelefons in der Ausnehmung versehen ist,
in dem ein Lautsprecher angeordnet ist, der mit dem Lautsprecher der Hörmuschel des Handtelefons gekoppelt ist,
das eine Buchse zum Anschluß eines Freisprech-Mikrofons besitzt, das mit dem Mikrofon des Handtelefons tonübertragend gekoppelt ist, und
das eine Antenneneingangsbuchse aufweist, die mit der Antenne des Handtelefons gekoppelt ist.

2. Freisprech-Adapter nach Anspruch 1, dadurch gekennzeichnet, daß die Spanneinrichtung aus einem auf einer Spannwelle befestigten Klemmhebel besteht, daß die Spannwelle in dem Gehäuse auf einer Seite der Ausnehmung frei drehbar gelagert und durch eine Torsionsfeder in Richtung auf die ausgeschwenkte Stellung des Klemmhebels beaufschlagt ist und daß die Spannwelle auf ihrem die Gehäuseoberseite überragenden Zapfen einen Betätigungshebel trägt.

3. Freisprech-Adapter nach Anspruch 1 oder 2, dadurch gekennzeichnet, daß der Klemmhebel an seinem freien Ende gegabelt ist und zwischen den Gabelschenkeln eine Spannrolle frei drehbar gelagert ist.

4. Freisprech-Adapter nach Anspruch 3, dadurch gekennzeichnet, daß die Spannrolle mit einem Mantel aus elastomerem Material versehen ist.

5. Freisprech-Adapter nach einem der Ansprüche 1 bis 4, dadurch gekennzeichnet, daß auf der dem Klemmhebel gegenüberliegenden Seite der Ausnehmung mindestens zwei Widerlager bildende und über die Höhe der Seite verlaufende Streifen aus elastomerem Material angeordnet sind.

6. Freisprech-Adapter nach einem der Ansprüche 1 bis 5, dadurch gekennzeichnet, daß das Gehäuse mit einem schwenkbaren Bügel versehen ist, dessen eines Ende ein auf die Hörmuschel klappbares Mikrofon und dessen anderes Ende einen auf das Mikrofon eines eingelegten Handtelefons klappbaren Lautsprecher trägt, der durch Leitungen mit einer Anschlußbuchse des Gehäuses verbunden ist.

7. Freisprech-Adapter nach Anspruch 6, dadurch gekennzeichnet, daß der Bügel aus einem zur Mittelebene der Ausnehmung parallel verlaufenden Federstahl-Streifen besteht, der in seinem mittleren Bereich an einem Halteteil befestigt ist, und daß das Halteteil eine zu der Mittelebene parallele Achse schwenkbar auf einem mit einem Seitenteil des Gehäuses verbindbaren Befestigungsstück gelagert ist.

8. Freisprech-Adapter nach Anspruch 6 oder 7, dadurch gekennzeichnet, daß das Halteteil in einer Lage, in der das Mikrofon und der Lautsprecher auf die Hörmuschel und das Mikrofon des Handtelefons geschwenkt sind, an dem Befestigungsteil arretierbar ist.

9. Freisprech-Adapter nach einem der Ansprüche 6 bis 8, dadurch gekennzeichnet, daß die Schenkel der Federstahl-Streifen aus einander teilweise überlappenden und auszieh- und einschiebbaren Abschnitten bestehen.

10. Freisprech-Adapter nach einem der Ansprüche 1 bis 5, dadurch gekennzeichnet, daß die Aussparung einendig durch eine mit Steckern versehene Wand geschlossen ist, die mit individuellen Buchsen des Handtelefons fluchten.

11. Freisprech-Adapter nach Anspruch 10, dadurch gekennzeichnet, daß die mit Steckern versehene Abschlußwand als Adapterteil in Führungen an einem Endbereich der Aussparung einschiebbar ist.

12. Freisprech-Adapter nach einem der vorhergehenden Ansprüche, dadurch gekennzeichnet, daß in Hohlräume des Gehäuses Verstärker und die Anpassungselektronik untergebracht sind.

13. Freisprech-Adapter nach einem der vorhergehenden Ansprüche, dadurch gekennzeichnet, daß aus dem Gehäuse im Bereich der Antenne des Handtelefons eine Sendeantenne ausziehbar oder ausklappbar angeordnet ist.

14. Freisprech-Adapter nach einem der vorhergehenden Ansprüche, dadurch gekennzeichnet, daß das Gehäuse mit einem mit der Kraftfahrzeugbatterie verbindbaren Versorgungskabel versehen ist.

15. Freisprech-Adapter nach einem der vorhergehenden Ansprüche, dadurch gekennzeichnet, daß das Gehäuse mit einer Kammer zur Aufnahme von Batterien oder Akkus versehen ist.

16. Freisprech-Adapter nach einem der vorhergehenden Ansprüche, dadurch gekennzeichnet, daß das Gehäuse mit Schaltern zur Aktivierung und zur Stummschaltung versehen ist.
